# FASCICULE DE BREVET EUROPEEN

(11) **EP 2 737 193 B1**
(45) Date de publication et mention de la délivrance du brevet: **14.11.2018**
(21) Numéro de dépôt: 12743520.4
(22) Date de dépôt: 17.07.2012
(51) Int. Cl.: F02K 1/72, F02K 1/62, F02K 3/06

(54) **ENSEMBLE PROPULSIF D'AÉRONEF**
FLUGZEUGTRIEBWERKSANLAGE
AIRCRAFT PROPULSION UNIT

(30) Priorité: 29.07.2011 FR 1156960
(43) Date de publication de la demande: 04.06.2014
(73) Titulaire: Safran Nacelles, 76700 Gonfreville-l'Orcher (FR)
(72) Inventeur: CARUEL, Pierre, 76600 Le Havre (FR)
(74) Mandataire: Gaillarde, Frédéric F. Ch.
(86) Numéro de dépôt international: PCT/FR2012/051693
(87) Numéro de publication internationale: WO 2013/017771

(56) Documents cités:
- WO-A1-96/19656
- FR-A1- 2 934 327
- GB-A- 1 259 045

## Description

La présente invention concerne un ensemble propulsif d'aéronef comprenant une nacelle de turboréacteur munie d'un dispositif d'inversion de poussée à grilles de déviation.

Un aéronef est mû par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent, notamment, un dispositif mécanique d'inversion de poussée.

L'ensemble propulsif de l'aéronef formé de la nacelle et du turboréacteur est destiné à être suspendu à une structure fixe de l'aéronef, par exemple sous une aile ou sur le fuselage, par l'intermédiaire d'un pylône de suspension.

La nacelle présente généralement une structure tubulaire comprenant une entrée d'air en amont du turboréacteur, une section médiane destinée à entourer une soufflante du turboréacteur, une section aval abritant les moyens d'inversion de poussée et destinée à entourer une chambre de combustion et les turbines du turboréacteur, et est généralement terminée par une tuyère d'éjection dont la sortie est située en aval du turboréacteur.

Cette nacelle peut être destinée à abriter un turboréacteur double flux, à savoir un turboréacteur apte à générer un flux d'air chaud (également appelé flux primaire) issu de la chambre de combustion du turboréacteur, et par l'intermédiaire des aubes de la soufflante en rotation et, un flux d'air froid (flux secondaire) qui circule à l'extérieur du turboréacteur à travers une veine d'écoulement du flux d'air froid.

Une structure externe dite OFS (Outer Fan Structure en termes anglo-saxons), abritant les moyens d'inversion de poussée, et une structure interne, dite IFS (Inner Fan Structure en termes anglo-saxons), destinée à couvrir une section aval du turboréacteur, appartenant toutes deux à la section aval de la nacelle, définissent la veine d'écoulement du flux d'air froid et ainsi une section de passage du flux d'air froid.

Concernant le dispositif d'inversion de poussée, il est adapté pour, lors de l'atterrissage de l'aéronef, améliorer la capacité de freinage de celui-ci en redirigeant vers l'avant au moins une partie de la poussée générée par le turboréacteur. Dans cette phase, il obstrue la veine d'écoulement du flux d'air froid et dirige ce dernier vers l'avant de la nacelle, générant de ce fait une contre-poussée qui vient s'ajouter au freinage des roues de l'aéronef.

Dans le cas d'un inverseur dit à grilles, la réorientation du flux d'air froid est effectuée par des grilles de déviation en association avec un capot ayant une fonction de coulissage visant à découvrir ou recouvrir ces grilles.

Des portes de blocage complémentaires, également appelées volets, activées par le coulissement du capot, permettent une fermeture de la veine d'écoulement du flux d'air froid, en aval des grilles de manière à permettre la réorientation du flux d'air froid vers les grilles de déviation.

Ces volets sont montés pivotants sur le capot coulissant entre une position rétractée dans laquelle ils assurent, avec ledit capot mobile, la continuité aérodynamique d'une paroi interne de la structure externe de la nacelle et une position déployée dans laquelle, en situation d'inversion de poussée, ils viennent obturer au moins partiellement la veine en vue de dévier le flux d'air froid vers les grilles de déviation découvertes par le coulissement du capot.

De façon classique, le pivotement de chaque volet est guidé par des biellettes rattachées, d'une part, au volet, et d'autre part, à un point fixe de la structure interne de la nacelle délimitant la veine d'écoulement du flux d'air froid.

L'installation d'un tel dispositif d'inversion de poussée à grilles sur un turboréacteur sous voilure est rendue complexe lorsque la contrainte de hauteur maximale de nacelle est critique de part une faible garde au sol de l'aéronef et une proximité entre le turboréacteur et la voilure de l'aéronef.

Une telle installation implique, en outre, une gestion délicate de la section de passage du flux d'air froid.

Dans le cadre de cette problématique, on a déjà proposé de mettre en place, dans un aéronef à faible garde au sol, un dispositif d'inversion de poussée à grilles en réduisant la longueur des grilles de déviation et en augmentant les fuites d'air axiales présentes naturellement entre les volets d'inversion (afin d'éviter les interférences), lorsqu'ils sont déployés en jet inversé du dispositif, et les fuites d'air axiales entre chaque volet et la structure interne de la nacelle délimitant la veine d'écoulement du flux d'air froid.

Les fuites entre chaque volet et la structure interne de la nacelle délimitant la veine sont d'autant plus importantes que la longueur des grilles de déviation est réduite afin de conserver sensiblement le même débit d'air du flux froid.

Ceci permet de réduire l'épaisseur du capot mobile et, par conséquent, de la nacelle qui peut conserver une section sensiblement circulaire.

Or, le choix de montage d'un tel dispositif implique une efficacité d'inversion réduite et faible puisque le débit de fuite impacte sur l'efficacité d'inversion.

Dans le cadre de cette problématique, on a, par ailleurs, proposé, également, de réduire la hauteur de la nacelle en proposant une nacelle non de révolution autour de l'axe central du turboréacteur, dite « nacelle aplatie ».

Une telle nacelle aplatie n'a a priori pas d'impact sur l'efficacité d'inversion. Il est possible de conserver le même niveau de fuites que sur un inverseur dans une configuration normale.

Dans ce cas les volets d'inversion de poussée sont de hauteur différente pour s'adapter à la hauteur de veine différente à 12 heures (i.e. dans la partie supérieure de la nacelle) et à 6 heures (c'est-à-dire dans la partie inférieure de la nacelle), et les bielles d'actionnement des volets d'inversion de poussée sont de longueurs différentes pour assurer que les volets pivotent tous avec le même angle.

La combinaison volets à fuite et nacelle aplatie, sans cinématique décalée, est donc faisable avec des bielles de longueur différente.

Le document FR2934327A1 divulgue un turboréacteur comprenant un système d'inversion de poussée avec un capot mobile en translation selon une direction parallèle à un axe longitudinal de la nacelle, et des volets montés pivotant entre un position rétractée en un position déployée, le système d'entraînement de volets étant adapté pour assurer une cinématique décalée de l'ensemble des volets, sur toute la périphérie de la veine d'air. Un but de la présente invention est de proposer une nacelle pour un aéronef à faible garde au sol qui présente des dimensions réduites tout en présentant une efficacité d'inversion la moins pénalisée possible.

Un autre but de la présente invention est de proposer une nacelle pour un aéronef à faible garde au sol dans laquelle les pertes d'efficacité d'inversion du dispositif d'inversion de poussée sont réduites.

Il est également désirable de proposer une nacelle dans laquelle on optimise la gestion de la section de passage du flux d'air froid.

A cet effet, l'invention propose un ensemble propulsif d'aéronef selon les revendications ci-annexées.

D'autres caractéristiques et avantages de la présente invention apparaîtront à la lumière de la description qui va suivre, et à l'examen des figures ci-annexées, dans lesquelles :
- la figure 1 est une vue en coupe longitudinale d'un ensemble propulsif d'aéronef;
- la figure 2 est une vue en coupe transversale d'une section d'éjection d'une nacelle selon un mode de réalisation de la présente invention;
- les figures 3 et 4 sont des vues en coupe longitudinale d'un dispositif d'inversion de poussée de la nacelle de la figure 2, respectivement en position de jet direct et en position de jet inversé, les vues en coupe dudit dispositif au niveau d'une section réduite de veine de la nacelle (en traits pleins) et au niveau d'une section nominale de veine de la nacelle (en traits pointillés) ayant été superposées sur chacune des figures ;
- la figure 5 est une vue de dessus du dispositif d'inversion de poussée de la figure 4.

Sur l'ensemble de ces figures, des numéros identiques ou analogues désignent des organes ou ensembles d'organes identiques ou analogues.

On notera que l'on a pris soin de définir dans la description un repère à trois axes X, Y Z, ces trois axes étant représentatifs :
- de la direction longitudinale du turboréacteur pour l'axe X,
- de la direction menant de l'axe longitudinal du turboréacteur à l'axe longitudinal du pylône pour la direction Z et,
- de la direction orthogonale à X et Z pour l'axe Y.

Dans le cas d'un ensemble propulsif monté sous aile d'un aéronef, l'axe Z est généralement vertical.

Dans la description ci-après, l'axe vertical sera assimilé à l'axe Z, même si l'ensemble propulsif d'aéronef est monté dans une autre configuration, tel que par exemple en fuselage arrière, ceci à des fins de simplification.

On notera également que les termes amont et aval s'entendent par rapport au sens de l'écoulement de l'air dans le turboréacteur en fonctionnement normal de jet direct..

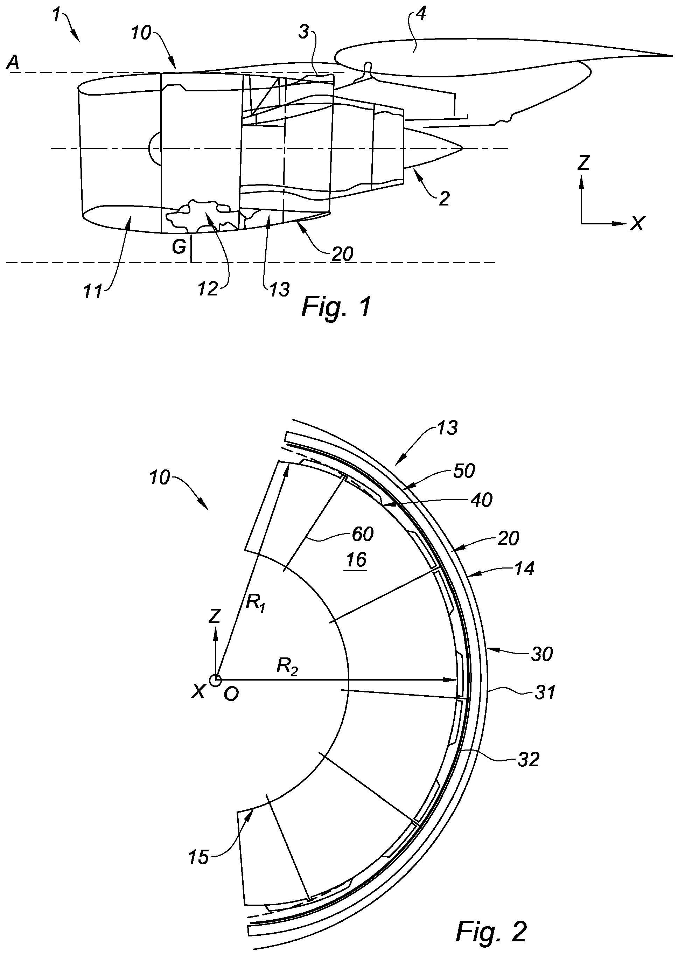

En référence à la figure 1, on observe un ensemble propulsif 1 d'un aéronef.

De façon générale, cet ensemble propulsif 1 d'aéronef est formé, notamment, par une nacelle 10 et un turboréacteur 2.

Un pylône 3 permet de suspendre l'ensemble propulsif 1 à une structure fixe 4 de l'aéronef, par exemple sous une aile ou sur le fuselage.

Comme illustré sur cette figure, l'aéronef présente une garde au sol définie entre le sol et la partie la plus basse de la nacelle 10, désignée par G sur la figure, faible.

De plus, on observe que l'ensemble propulsif 1 est à proximité de la voilure, comme indiqué par le trait en pointillés, désigné par A sur la figure.

La nacelle 10 est destinée à constituer un logement tubulaire pour le turboréacteur 2 double flux et sert à canaliser les flux d'air qu'il génère par l'intermédiaire des aubes d'une soufflante (non représentée), à savoir un flux d'air chaud traversant une chambre de combustion du turboréacteur 2, et un flux d'air froid circulant à l'extérieur du turboréacteur 2.

La nacelle 10 possède, de manière générale, une structure comprenant une section avant 11 formant une entrée d'air, une section médiane 12 entourant la soufflante du turboréacteur 2, et une section aval 13 entourant le turboréacteur 2 et comprenant un dispositif d'inversion de poussée 20.

En référence plus particulièrement aux figures 2 à 4, la section aval 13 de la nacelle 10 comprend une structure externe 14 dite OFS comportant le dispositif d'inversion de poussée 20 et une structure interne 15 dite IFS de carénage du turboréacteur 2 définissant avec la structure externe 14, une veine 16 destinée à la circulation et l'échappement du flux d'air froid.

Le dispositif d'inversion de poussée 20, illustré sur ces figures, est un inverseur à grilles de déviation du flux froid.

Ainsi, ce dispositif 20 comprend un capot 30 mobile monté en translation, selon une direction sensiblement parallèle à un axe X longitudinal de la nacelle 10, par rapport à une structure fixe 17 de la nacelle 10 comprenant au moins un cadre avant 18.

Ce capot 30 est, également, prolongé par au moins une section de tuyère d'éjection 40 visant à canaliser l'éjection du flux d'air froid, montée à une extrémité aval dudit capot 30.

Plus précisément, le capot 30 comprend une virole externe 31 et une virole interne 32 qui vient en continuité du cadre avant 18 et est destinée à délimiter, dans une position de jet direct du turboréacteur 2 une paroi externe de la veine 16 dans laquelle s'écoule le flux d'air froid.

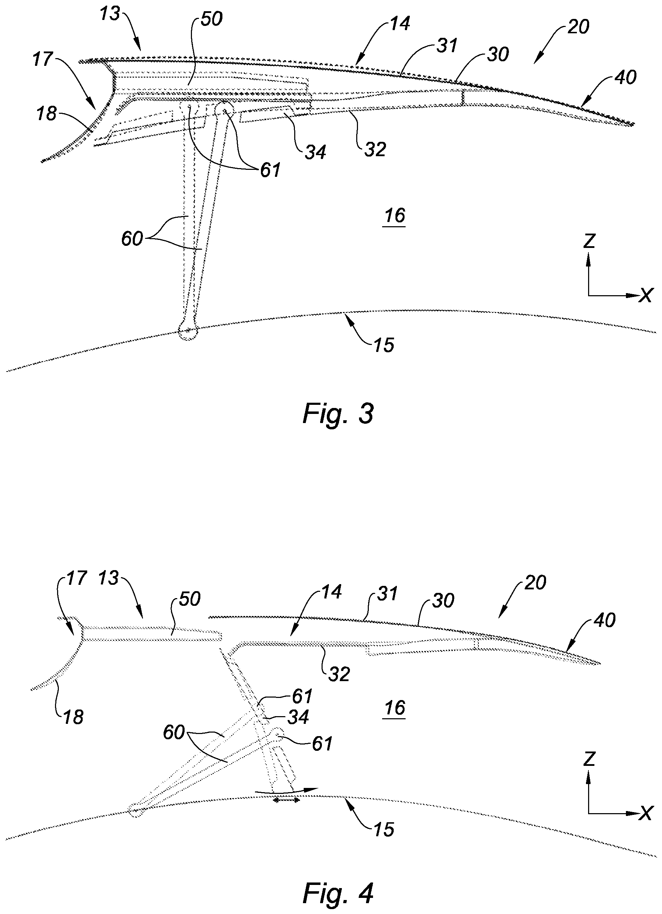

Le capot 30 est apte à passer alternativement d'une position de fermeture (illustrée sur la figure 3) dans laquelle il assure la continuité aérodynamique des lignes de la structure fixe 17 de la nacelle 10 et couvre des grilles de déviation 50, à une position d'ouverture (illustrée sur la figure 4), en aval de la nacelle 10, dans laquelle il ouvre un passage dans la nacelle 10 et découvre les grilles de déviation 50.

Dans sa position d'ouverture illustrée sur la figure 4, le capot 30 permet au flux d'air froid du turboréacteur 2 de s'échapper au moins partiellement, cette portion de flux étant réorientée vers l'amont de la nacelle, notamment par les grilles de déviation 50 découvertes, générant de ce fait une contre-poussée apte à aider au freinage de l'aéronef.

Dans un mode de réalisation du dispositif d'inversion de poussée 20, afin d'augmenter la portion de flux d'air froid traversant les grilles de déviation 50, la virole interne 32 du capot 30 peut comprendre une pluralité de volets d'inversion 34, répartis sur sa circonférence.

Chaque volet d'inversion 34 est monté pivotant par une extrémité autour d'un axe d'articulation, sur le capot 30 coulissant, entre au moins une position rétractée (illustrée sur la figure 3), correspondant à un fonctionnement en poussée directe du turboréacteur 2, dans laquelle le volet 34 obture l'ouverture à grilles 50 et assure la continuité aérodynamique intérieure de la veine 16 avec le cadre avant 18 et une position déployée (illustrée sur la figure 4) dans laquelle, en situation d'inversion de poussée, il obture partiellement la veine 16 en vue de dévier le flux d'air froid vers les grilles 50.

Dans le cadre de la présente invention, la longueur des grilles de déviation 50 est réduite et les dimensions d'au moins un volet d'inversion 34 sont adaptées pour créer une fuite d'air (désignée par une flèche sur la figure 4) entre ce volet d'inversion 34 et la structure interne 15 de la nacelle 10, lorsque les volets 34 sont en position déployée.

Lors du fonctionnement du turboréacteur 2 en poussée directe, le capot coulissant 30 forme tout ou partie d'une partie aval de la nacelle, les volets 34 étant alors rétractés dans le capot coulissant 30.

Pour inverser la poussée du turboréacteur 2, comme illustré sur la figure 4, le capot coulissant 30 est déplacé en position aval et les volets 34 pivotent en position déployée de manière à dévier le flux d'air froid vers les grilles 50 formant un flux d'air inversé guidé par les grilles 50.

Par ailleurs, en référence plus particulièrement à la figure 2, la nacelle 10 est formée de deux demi capots 30 curvilignes, dont un seul est visible sur la figure, adaptés pour être reliés à des poutres supérieure et/ou inférieure (non illustrées) solidaires du pylône de suspension 3 de l'ensemble propulsif d'aéronef 1.

Ces poutres supérieure et inférieure de la nacelle sont situées verticalement aux positions dites 6 heures et 12 heures.

Avantageusement, la veine d'échappement du flux d'air froid 16 n'est pas de révolution autour de l'axe longitudinal X.

Plus précisément, la section transversale, dans le plan YZ, de la veine 16 n'est pas constante sur la périphérie de la veine 16.

Plus particulièrement, sa forme et ses dimensions sont adaptées de manière à proposer une section transversale de passage de flux d'air froid asymétrique, dont les dimensions sont plus importantes en direction horizontale Y qu'en direction verticale Z de la veine 16.

La veine présente une section aplatie de part et d'autre des poutres supérieure et/ou inférieure reliées au pylône 3 de manière à être compatible avec la faible garde au sol de l'aéronef et la proximité de la voilure 4.

La veine 16 présente, dès lors, une zone de section transversale réduite de part et d'autre des poutres supérieure et/ou inférieure reliées au pylône 3 sur une distance angulaire limitée, c'est-à-dire en partie supérieure et/ou inférieure de la nacelle 10.

La hauteur selon Z de la veine 16 est ainsi réduite en partie supérieure et/ou inférieure de veine 16.

Pour réaliser une telle veine 16, le dispositif d'inversion de poussée présente un encombrement réduit verticalement.

Plus particulièrement, l'ensemble des deux demi capots 30 présente une forme ellipsoïdale dont le grand axe est parallèle à l'axe Y et le petit axe est parallèle à l'axe Z.

Plus précisément, la virole interne 32 de chaque demi-capot 30 n'est pas centrée sur un point O qui coincide avec l'axe longitudinal X et n'est pas circulaire en section tranversale tandis que la structure interne 15 de la nacelle 10 est centrée sur ledit point O.

Ainsi, le rayon R1 de la virole interne 32 de chaque demi-capot 30, de part et d'autre des poutres supérieure et/ou inférieure du pylône 3, est inférieure au rayon R2 de ladite virole 32 selon l'axe Y.

Les rayons R1 et R2 sont déterminés à partie du point O.

On réduit, ainsi, la hauteur de la veine 16 en partie supérieure et/ou inférieure de la nacelle 10 définissant, sur ces parties, une zone de section transversale réduite de la veine 16 sur la distance angulaire susmentionnée.

On dispose, dès lors, comme illustré sur la figure 2, les volets de déviation 34 de façon décalée radialement relativement à O, selon leur position sur la périphérie de la veine 16 et la cironférence de la nacelle 10.

Les volets 34 montés en zone de section transversale réduite de la veine 16 sont décalés radialement par rapport aux autres volets 34 montés sur la périphérie restante de la veine 16.

Concernant le système d'entraînement des volets 34, il est décrit ci-après en relation avec les figures 2 à 4.

Chaque volet 34 est supporté par un axe pivot solidaire du capot 30 de la nacelle 10 et entraîné en pivotement par au moins une bielle 60 traversant la veine 16.

Chaque bielle 60 d'entraînement est montée mobile en rotation autour de points d'ancrage respectivement sur le volet 34 correspondant et sur la structure interne 15 de la nacelle 10.

Ainsi, lors d'un déplacement du capot 30 vers l'amont ou vers l'aval de la nacelle 10 entraîné par un actionneur adapté, chaque bielle 60 assure le pivotement du volet 34 correspondant.

Il est à noter que, dans le mode de réalisation illustré sur les figures 3 et 4, le pivotement du volet 34 autour de son pivot transversal à l'axe longitudinal X de la nacelle est assuré à son extrémité amont.

Il est bien évidemment possible de réaliser une articulation du volet 34 en aval dans la veine 16, par son extrémité aval.

Selon la présente invention, le système d'entraînement des volets 34 comprend des moyens d'entraînement adaptés pour assurer, de façon sélective, une cinématique décalée des volets 34 montés sur la zone de section transversale réduite de la veine 16 relativement à la cinématique des volets 34 montés sur le reste de la périphérie de la veine 16.

Dans un premier mode de réalisation, les moyens d'entraînement sont adaptés pour mettre en oeuvre un pivotement décalé des volets 34 montés sur la zone de section transversale réduite de la veine 16 relativement aux volets 34 montés sur le reste de la périphérie de la veine 16.

De tels moyens d'entraînement déploient les volets 34 montés sur la zone de section transversale réduite de la veine 16 en amont ou en aval des autres volets 34, comme décrit plus loin en relation avec les figures 3 et 4.

Dans un second mode de réalisation, les moyens d'entraînement sont adaptés pour mettre en oeuvre un déploiement en décalé des volets 34 montés sur la zone de section transversale réduite de la veine 16 relativement aux volets 34 montés sur le reste de la périphérie de la veine 16.

De tels moyens d'entraînement retardent ou accélèrent le déploiement des volets 34 montés sur la zone de section transversale réduite de la veine 16 relativement aux autres volets 34 .

Cela signifie que les mouvements d'un volet 34 montés sur la zone de section transversale réduite de la veine 16 et d'un volet monté sur le reste de la périphérie de la veine 16 peuvent être actionnés en léger décalage l' un par rapport à l'autre.

Dans une variante de réalisation des premier et second modes de réalisation de tels moyens d'entraînement, on prévoit des bielles 60 d'entraînement de longueur différente et/ou des points d'ancrage à une station différente des bielles 60 situés sur les volets 34 et/ou la structure interne 15 de la nacelle 10.

En référence aux figures 3 et 4, les bielles 60 d'entrainement de chacun des volets 34 d'inversion sur l'ensemble de la périphérie de la veine 16 ont une longueur identique, ce qui réduit les erreurs de maintenance et les coûts de logistique.

Dans cette variante, les points d'ancrage des têtes 61 de bielles 60 des volets 34 montés sur la zone de section transversale réduite de la veine 16, à savoir en partie supérieure et/ou inférieure de la veine 16 sont décalés relativement à ceux des autres volets 34 d'inversion.

Plus précisément, les points d'ancrage des têtes 61 de bielles 60 des volets 34 montés sur la zone de section transversale réduite de la veine 16 sont décalés le long de l'axe X et placés en aval des points d'ancrage des têtes 61 des bielles 60 d'entraînement des autres volets d'inversion 34.

On observe ce décalage sur les figures 3 et 4 dans lesquelles les volets 34 montés sur la zone de section transversale réduite de la veine 16 et leur système d'entrainement sont désignés en trait pleins tandis que les autres volets 34 et le système d'entrainement correspondant sont en traits pointillés.

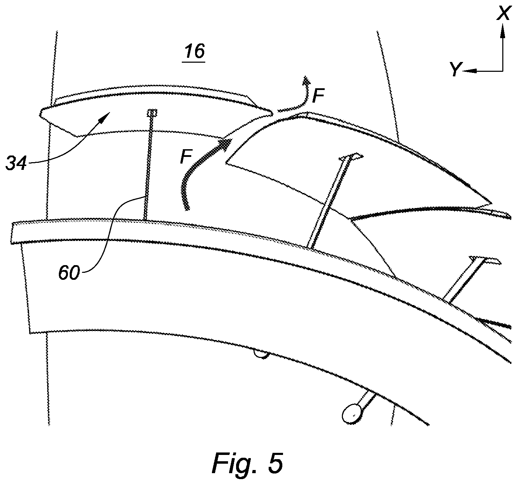

En référence aux figures 4 et 5, lors d'une phase d'inversion de poussée du turboréacteur 2, le capot coulissant 30 est déplacé verrs l'aval de la nacelle 10 entraînant, dans son coulissement, le pivotement des volets d'inversion 34 dans la veine 16.

A la fin de leur déploiement, les volets 34 montés sur la zone de section réduite de la veine 16 sont déployés en aval des autres volets 34 d'inversion, créant ainsi une fuite F du flux d'air froid tangentielle aux volets 34 montés sur la zone de section transversale réduite de la veine 16 et aux autres volets 34 adjacents, ladite fuite étant désignée par F et les flèches correspondantes sur la figure 5.

Cette fuite F particulière ainsi réalisée sur la section transversale de veine 16 la plus réduite, permet l'échappement d'un écoulement de flux d'air froid avec une vitesse axiale selon X plus faible que celle d'un dispositif d'inversion de poussée de l'art antérieur dans lequel la fuite entre les volets était dirigée axialement suivant X.

Les pertes d'efficacité d'inversion du dispositif d'inversion de poussée sont, par conséquent, réduites.

En effet, pour une efficacité d'inversion donnée du dispositif d'inversion poussée, la fuite sous les volets 34 peut ainsi être plus importante et donc la longueur des grilles de déviation 50 peut être réduite, facilitant leur installation dans l'épaisseur du capot d'inversion de poussée et/ou la section médiane de la nacelle 10.

En effet, pour un débit donné à travers l'inverseur, l'augmentation de la part de fuite réduit l'efficacité car l'air sortant crée de la poussée dans la direction axiale.

Si l'on parvient à créer moins de poussée dans la direction axiale par déviation tangentielle de l'écoulement de fuite pour le même débit, on augmente donc l'efficacité.

En prenant comme objectif une efficacité donnée, on peut donc, toujours à iso débit d'air total dans l'inverseur, faire passer moins d'air dans les grilles et plus d'air par le section de fuite, donc réduire la longueur des grilles (estimation de l'ordre de 1 à 2%)

Par ailleurs, comme illustré notamment sur la figure 5, les articulations des volets 34 peuvent être montées dans l'épaisseur de lignes aérodynamiques du capot 30.

Bien évidemment, si l'épaisseur des lignes aérodynamiques n'est pas suffisante, il est possible de prévoir un débordement desdites lignes avec une association de carénage aérodynamique en interne ou en externe selon la cinématique retenue.

Par ailleurs, la nacelle 10 comprend, sur la figure 2, cinq volets d'inversion de poussée 34 pivotants sur chacun des demi-capots 30.

Bien évidemment, le nombre des volets dépend de la géométrie et de la taille du moteur et n'est pas limité à ceux illustrés.

Bien que l'invention ait été décrite avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

C'est ainsi par exemple que l'on pourrait envisager d'appliquer l'invention à un inverseur de poussée dans lequel le capot d'inversion de poussée est formée d'un seul tenant sur toute la périphéire de l'inverseur (inverseur de poussée dit « O-duct »).

C'est ainsi par exemple également que l'on pourrait envisager que les points d'ancrage des volets d'inversion de poussée des zones de section réduite de la veine d'air froid soient situés à l'amont des points d'ancrage des autres volets, ce qui positionnera les volets 12 heures / 6 heures devant les volets de la zone courante.

## Revendications

1. Ensemble propulsif d'aéronef (1) comprenant au moins un turboréacteur (2) et une nacelle (10), ladite nacelle (10) comprenant :
- une structure externe munie d'un dispositif d'inversion de poussée (20) et,
- une structure interne destinée à couvrir une section aval du turboréacteur,
la structure externe et la structure interne définissant une veine (16) d'écoulement d'un flux d'air du turboréacteur (2),
le dispositif d'inversion de poussée (20) comprenant :
- des moyens de déviation (50) d'au moins une partie du flux d'air du turboréacteur (2) et,
- au moins un capot (30) mobile en translation selon une direction parallèle à un axe longitudinal de la nacelle, le capot étant apte à passer alternativement d'une position de fermeture dans laquelle il assure la continuité aérodynamique de la nacelle à une position d'ouverture dans laquelle il ouvre un passage dans la nacelle destinée au flux d'air dévié,
- des volets (34) montés pivotant entre une position rétractée dans laquelle ils assurent la continuité aérodynamique de la nacelle et une position déployée dans laquelle, en situation d'inversion de poussée, ils viennent obturer partiellement la veine (16) en vue de dévier le flux d'air vers les moyens de déviation (50) découverts par le coulissement du capot (30), chaque volet (34) étant associé à un système d'entraînement,
la veine (16) présentant une section transversale avec une hauteur non constante sur la périphérie de la nacelle (10) de sorte qu'au moins un volet (34) est décalé radialement par rapport à l'axe central du turboréacteur (2), relativement aux volets (34) adjacents et,
le système d'entraînement des volets (34) décalés radialement étant adapté pour assurer une cinématique décalée desdits volets (34) relativement à la cinématique des volets (34) montés sur le reste de la périphérie de la veine, la veine (16) présentant une zone de section transversale réduite sur une distance angulaire limitée dans laquelle la hauteur de la veine (16) est réduite en partie supérieure et/ou inférieure de la veine (16) de part et d'autre de poutres supérieure et/ou inférieure reliées à un pylône (3) de suspension de l'ensemble propulsif et le système d'entraînement étant adapté pour mettre en oeuvre un pivotement décalé des volets (34) montés sur la zone de section transversale réduite de la veine (16) relativement aux volets (34) montés sur le reste de la périphérie de la veine (16).

2. Ensemble selon la revendication 1 **caractérisé en ce que** le rayon (R1) d'une virole interne (32) du capot (30), de part et d'autre des poutres supérieure et/ou inférieure est inférieur au rayon (R2) de ladite virole (32) selon un axe horizontal, perpendiculaire à l'axe central du turboréacteur (X).

3. Ensemble selon l'une des revendications 1 ou 2 **caractérisé en ce que** le système d'entraînement est adapté pour déployer les volets (34) montés sur la zone de section transversale réduite de la veine (16) en amont ou en aval des autres volets (34) montés sur le reste de la périphérie de la veine (16).

4. Ensemble selon l'une des revendications 1 ou 2 **caractérisé en ce que** le système d'entraînement est adapté pour mettre en oeuvre un déploiement en décalé des volets (34) montés sur la zone de section transversale réduite de la veine relativement aux volets montés sur le reste de la périphérie de la veine.

5. Ensemble selon l'une des revendications 1 à 4 **caractérisé en ce que** le système d'entraînement comprend au moins une bielle (60) d'entraînement pour chacun des volets (34), lesdites bielles (60) étant de longueur identique et les points d'ancrage (61) des bielles (60) situés sur les volets (34) montés sur la zone de section transversale réduite de la veine (16) sont décalés le long de l'axe central (61) des bielles (60) situés sur des volets (34) montés sur le reste de la périphérie de la veine.

6. Ensemble selon l'une des revendications 1 à 5 **caractérisé en ce que** le système d'entraînement comprend au moins une bielle (60) d'entraînement pour chacun des volets (34), lesdites bielles (60) étant de longueur identique et les points d'ancrage des bielles, situés sur la structure interne de la nacelle (10), des volets (34) montés sur la zone de section transversale réduite de la veine (16) étant décalés relativement à ceux des volets (34) montés sur le reste de la périphérie de la veine (16).

## Patentansprüche

1. Luftfahrzeugantriebsaggregat (1), das mindestens ein Turboluftstrahltriebwerk (2) und eine Gondel (10) umfasst, wobei die Gondel (10) Folgendes umfasst:
- eine externe Struktur, die mit einer Schubumkehrvorrichtung (20) versehen ist, und
- eine interne Struktur, die dazu bestimmt ist, einen Abschnitt stromabwärts des Turboluftstrahltriebwerks abzudecken,
wobei die externe Struktur und die interne Struktur eine Strömungsbahn (16) eines Luftflusses des Turboluftstrahltriebwerks (2) definieren,
wobei die Schubumkehrvorrichtung (20) Folgendes umfasst:
- Mittel (50) zum Umlenken mindestens eines Teils des Luftflusses des Turboluftstrahltriebwerks (2), und
- mindestens eine Haube (30), die in Verschiebung entlang einer Richtung parallel zu einer Längsachse der Gondel beweglich ist, wobei die Haube geeignet ist, abwechselnd von einer Schließposition, in der sie die aerodynamische Kontinuität der Gondel sicherstellt, zu einer Öffnungsposition, in der sie einen Durchgang in der Gondel öffnet, der für den umgelenkten Luftfluss bestimmt ist, überzugehen,
- Klappen (34) die zwischen einer eingezogenen Position, in der sie die aerodynamische Kontinuität der Gondel sicherstellen, und einer ausgefahrenen Position, in der sie in Schubumkehrsituation die Bahn (16) teilweise verschließen, um den Luftfluss zu den Umlenkmitteln (50) umzulenken, die durch das Gleiten der Haube (30) abgedeckt sind, schwenkend montiert sind, wobei jede Klappe (34) mit einem Antriebssystem verbunden ist,
wobei die Bahn (16) einen Querschnitt mit einer Höhe umfasst, die auf dem Umfang der Gondel (10) nicht konstant ist, so dass mindestens eine Klappe (34) radial in Bezug auf die Mittenachse des Turboluftstrahltriebwerks (2) bezüglich der benachbarten Klappen (34) versetzt ist, und
wobei das Antriebssystem der radial versetzten Klappen (34) angepasst ist, um eine versetzte Kinematik der Klappen (34) in Bezug auf die Kinematik der Klappen (34), die auf dem Rest des Umfangs der Bahn montiert sind, sicherzustellen,
wobei die Bahn (16) eine Zone mit reduziertem Querschnitt auf einem begrenzten Winkelabstand aufweist, auf dem die Bahn (16) im oberen Teil und/oder unteren Teil der Bahn (16) zu beiden Seiten des oberen und/oder unteren Trägers reduziert ist, die mit einem Aufhängungsständer (3) des Antriebsaggregats verbunden sind, und wobei das Antriebssystem angepasst ist, um das versetzte Schwenken der Klappen (34) umzusetzen, die auf der Zone mit reduziertem Querschnitt der Bahn (16) in Bezug auf die Klappen (34), die auf dem Rest des Umfangs der Bahn (16) montiert sind, montiert sind.

2. Baugruppe nach Anspruch 1, **dadurch gekennzeichnet, dass** der Radius (R1) eines inneren Mantelschusses (32) der Haube (30) zu beiden Seiten des oberen und/oder unteren Trägers kleiner ist als der Radius (R2) des Mantelschusses (32) entlang einer horizontalen Achse, die zu der Mittenachse (X) des Turboluftstrahltriebwerks senkrecht ist.

3. Baugruppe nach einem der Ansprüche 1 oder 2, **dadurch gekennzeichnet, dass** das Antriebssystem angepasst ist, um die Klappen (34), die auf der Zone mit reduziertem Querschnitt der Bahn (16) stromaufwärts oder stromabwärts der anderen Klappen (34) montiert sind, die auf dem Rest des Umfangs der Bahn (16) montiert sind, auszufahren.

4. Baugruppe nach einem der Ansprüche 1 oder 2, **dadurch gekennzeichnet, dass** das Antriebssystem angepasst ist, um ein versetztes Ausfahren der Klappen (34), die auf der Zone mit reduziertem Querschnitt der Bahn montiert sind, in Bezug auf die Klappen, die auf dem Rest des Umfangs der Bahn montiert sind, umzusetzen.

5. Baugruppe nach einem der Ansprüche 1 bis 4, **dadurch gekennzeichnet, dass** das Antriebssystem mindestens ein Antriebspleuel (60) für jede der Klappen (34) umfasst, wobei die Pleuel (60) identische Länge haben, und die Verankerungsstellen (61) der Pleuel (60), die auf den Klappen (34) liegen, die auf der Zone mit reduziertem Querschnitt der Bahn (16) montiert sind, entlang der Mittenachse (61) der Pleuel (60), die auf Klappen (34) liegen, die auf dem Rest des Umfangs der Bahn montiert sind, versetzt werden.

6. Baugruppe nach einem der Ansprüche 1 bis 5, **dadurch gekennzeichnet, dass** das Antriebssystem mindestens ein Antriebspleuel (60) für jede der Klappen (34) umfasst, wobei die Pleuel (60) identische Länge haben, und wobei die Verankerungsstellen der Pleuel, die auf der internen Struktur der Gondel (10) liegen, der Klappen (34), die auf der Zone mit reduziertem Querschnitt der Bahn (16) liegen, in Bezug auf diejenigen der Klappen (34), die auf dem Rest des Umfangs der Bahn (16) montiert sind, versetzt sind.

## Claims

1. An aircraft propulsion assembly (1) comprising at least one turbojet engine (2) and one nacelle (10), said nacelle (10) comprising :
- an outer structure provided with a thrust reverser device (20), and
- an inner structure intended to cover a downstream section of the turbojet engine,
the outer structure and the inner structure defining a flow path (16) of an air flow of the turbojet engine (2),
the thrust reverser device (20) comprising:
- means (50) for diverting at least one portion of the air flow of the turbojet engine (2), and
- at least one cowl (30) movable in translation according to a direction parallel to a longitudinal axis of the nacelle, the cowl being capable of alternately switching from a closed position in which it ensures the aerodynamic continuity of the nacelle into an open position in which it opens a passage in the nacelle intended to the diverted airflow,
- flaps (34) pivotally mounted between a retracted position in which they ensure the aerodynamic continuity of the nacelle and a deployed position in which, when in a thrust reversal situation, they partially seal the flow path (16) in order to divert the air flow towards the diverting means (50) uncovered by sliding of the cowl (30), each flap (34) being associated to one drive system,
the flow path (16) having a cross-section with a non-constant height over the periphery of the nacelle (10) so that at least one flap (34) is radially offset with respect to the central axis of the turbojet engine (2), relative to the adjacent flaps (34), and
the drive system of the radially offset flaps (34) being adapted to ensure offset kinematics of said flaps (34) relative to the kinematics of the flaps (34) mounted on the remainder of the periphery of the flow path,
the flow path (16) having a reduced cross-section area over a limited angular distance in which the height of the flow path (16) is reduced at the upper and/or lower portion of the flow path (16) on either side of upper and/or lower beams connected to a suspension mast (3) of the propulsion assembly and the drive system being adapted to implement an offset pivoting of the flaps (34) mounted on the reduced cross-section area of the flow path (16) relative to the flaps (34) mounted on the remainder of the periphery of the flow path (16).

2. The assembly according to claim 1, **characterized in that** the radius (R1) of an inner shroud (32) of the cowl (30), on either side of the upper and/or lower beams is smaller than the radius (R2) of said shroud (32) according to a horizontal axis, perpendicular to the central axis of the turbojet engine (X).

3. The assembly according to any of claims 1 or 2, **characterized in that** the drive system is adapted to deploy the flaps (34) mounted on the reduced cross-section area of the flow path (16) upstream or downstream of the other flaps (34) mounted on the remainder of the periphery of the flow path (16).

4. The assembly according to any of claims 1 or 2, **characterized in that** the drive system is adapted to implement an offset deployment of the flaps (34) mounted on the reduced cross-section area of the flow path relative to the flaps mounted on the remainder of the periphery of the flow path.

5. The assembly according to any of claims 1 to 4, **characterized in that** the drive system comprises at least one drive connecting rod (60) for each of the flaps (34), said connecting rods (60) having identical lengths and the anchoring points (61) of the connecting rods (60) located on the flaps (34) mounted on the reduced cross-section area of the flow path (16) are offset along the central axis of the connecting rods (60) located on flaps (34) mounted on the remainder of the periphery of the flow path.

6. The assembly according to any of claims 1 to 5, **characterized in that** the drive system comprises at least one drive connecting rod (60) for each of the flaps (34), said connecting rods (60) having identical lengths and the anchoring points of the connecting rods located on the inner structure of the nacelle (10), flaps (34) mounted on the reduced cross-section area of the flow path (16) being offset relative to those of the flaps (34) mounted on the remainder of the periphery of the flow path (16).
